# EUROPEAN PATENT SPECIFICATION

(11) **EP 1 785 912 B1**
(45) Date of publication and mention of the grant of the patent: **09.03.2011**
(21) Application number: 06112402.0
(22) Date of filing: 07.04.2006
(51) Int. Cl.: G06K 7/00, H04W 88/02, H04B 1/38, H04M 1/02

(54) **Holding module for SIM card for expanding and enhancing functions of a mobile communication device**
Haltemodul für eine SIM-Karte zur Erweiterung und Verbesserung der Funktionen eines mobilen Kommunikationsgerätes
Module de maintien pour carte SIM permettant d'étendre et d'améliorer les fonctions d'un dispositif de communication mobile

(30) Priority: 11.11.2005 CN 200520133853
(43) Date of publication of application: 16.05.2007
(73) Proprietor: Stancom Sàrl, 1066 Epalinges (CH); A-Men Technology Corporation, Taoyuan 30316, Taiwan 325 (TW)
(72) Inventor: Wang Pen-Lo, Bernard, Taoyuan, Taiwan 325, 30316 (CN)
(74) Representative: GLN

(56) References cited:
- EP-A- 1 077 578
- GB-A- 2 363 882
- US-B1- 6 424 118

## Description

### Technical field

The present invention relates to a holding module for SIM (Subscriber Identification Module) card, intended to be connected electrically with a SIM card slot of a mobile communication device including electrical contact pads intended to be connected with a SIM card. The mobile communication device is preferably of the type including at least a device microcontroller controlling in particular a device interface application. The holding module comprises at least a first set of electrical connectors including holding module contact pads as well as terminal electrical connectors intended to connect a SIM card to said device electrical contact pads.

The present invention is more specifically, although not exclusively, intended for being implemented in mobile telephony terminals, in particular complying with the GSM (Global System for Mobile communications), GPRS (General Packet Radio Service) or UMTS (Universal Mobile Telecommunications System) standards.

Typical SIM cards are made from plastic material on which are assembled information and storage means including a functional module (so-called SIM) with an electronic chip. The assembly respects a certain number of well-known standards, whether regarding physical (dimensions, location of the chip, etc.), electrical and/or electronic parameters.

A SIM card stores a certain number of data items concerning the telephone subscription such as the name of the operator with which the subscription has been taken out, subscriber identification data, as well as embedded applications. These applications allow in particular to access to services present on remote servers, via a telephone network, or can simply be executed locally. To do this, SIM cards comply to a technology known as SIM Toolkit technology.

### Background art

Holding modules or holders for SIM cards as mentioned above are well known from the prior art. More particularly, such holders adapted for carrying two smartcards are known in the prior art, a first of which being a SIM card and the second one being generally a memory card, these modules being inserted within a specific slot of a mobile communication device, while bearing at least one SIM card in order to connect the latter to the communication device.

However, the implementation of such modules is limited to specific telephony terminal models including a slot which is adapted to cooperate with them. An example is given by GB-A-2363882, where the holding module is mounted on a mobile phone battery. The corresponding solution is thus ill-suited for users wishing to change of telephony terminal on a regular basis as it restricts their available choice on the telephony terminal market.

Other modules are known for carrying two SIM cards to be physically connected simultaneously with a mobile communication device. Usually, a reboot operation of the device is necessary to switch from one SIM card to the other.

Thus, the overall functionality of these modules in term of available memory capacity and applications is limited to the sum of the respective capacities of the two borne SIM cards. Further, as the two SIM cards cannot be activated at the same time, the corresponding system including the communication device together with the holding module and the two SIM cards define two distinct and independent sets composed of memory capacity and embedded applications. Thus, the memory of a given SIM card cannot be accessed to while the other SIM card is being active.

### Disclosure of the invention

A main object of the present invention is to provide a holding module for SIM card for expanding and enhancing functions of the latter. A further object of the invention is to provide such a module being at the same time compatible with any mobile communication device available on the market.

For that purpose, the present invention concerns a holding module for SIM card of the above-mentioned type. It comprises electronic circuits including a holding module microcontroller and memory means electrically connected to the terminal electrical connectors. Its electronic circuits are adapted for providing the mobile communication device with at least one further application intended to be accessible through the device interface application.

Preferably, the electronic circuits are adapted to generate a new interface entity within the device interface application through which said further application or applications is or are accessible. When the device interface application provides an interface menu including items respectively related to device service applications, the new interface entity may comprise an additional menu item intended to appear within the interface menu.

More preferably, the holding module comprises at least a second set of electrical connections including holding module contact pads, and its shape is adapted to allow holding of at least two SIM cards, while maintaining its ability to be connected electrically with a standard SIM card slot of a mobile communication device.

### Brief description of the drawings

The present invention and the corresponding advantages and features provided thereby will be best understood and appreciated upon review of the following detailed description of the invention, taken in conjunction with the following drawings in which:

FIG. 1 is a perspective schematic view of a holding module for SIM card represented above a mobile telecommunication device in which it is intended to be inserted, according to the state of the art;

FIG. 2 is a perspective detailed view of a holding module for SIM card according to a preferred embodiment of the present invention;

FIG. 3 is a schematic bloc diagram of a mobile communication device incorporating a holding module for SIM card according to the present invention;

FIG. 4 is a schematic bloc diagram of a detail of the functionalities of the holding module according to a preferred embodiment of the present invention;

FIG. 5 is a schematic bloc diagram relating to a further embodiment of the holding module according to the present invention, and

FIG. 6 is a schematic bloc diagram relating to a still further embodiment of the holding module according to the present invention.

### Mode(s) for carrying out the invention

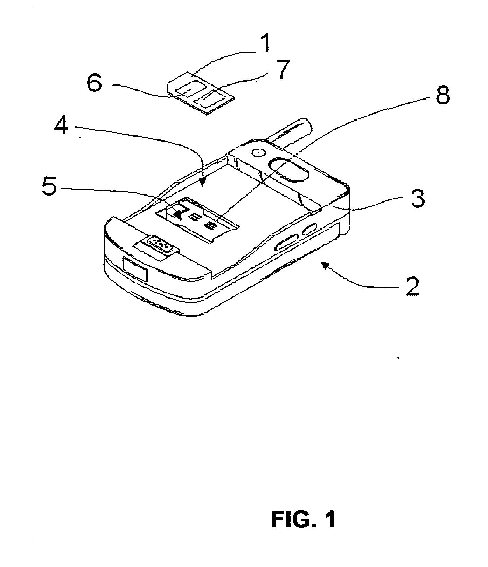

FIG. 1 is a perspective schematic view of a holding module 1 for SIM card according to the state of the art represented above a mobile phone 2 in which it is intended to be inserted.

The mobile phone has a housing 3 within which is provided a battery receptacle 4 to be closed by a cover (not represented), generally located on the back of the phone housing. A slot 5 for SIM card is conventionally provided within the battery receptacle.

The holding module 1 represented on FIG. 1, in a non limiting manner, is intended to hold two SIM cards 6 and 7 simultaneously, while having the shape and the size of a standard SIM card. For that purpose, the plastic material of each of the two SIM cards is cut out, as well as a peripheral part of the SIM card electronic circuits which are not implemented in conventional use of a mobile phone, to keep only a functional central part before placing them on the holding module.

Further, the holding module 1 may include (non visible) electrical paths and basic integrated circuits respectively for connecting alternately one or the other of the SIM cards to the mobile phone 2 and for executing controlling function of the two SIM cards. The electrical paths are connected to contact pads adapted for matching contacts pads 8 arranged in the mobile phone slot 5.

Each SIM card is generally used to store information identifying the mobile phone user. Such information, which typically is thought of or referred to as a set of subscription parameters, includes the identity of the user and/or user account, and the network in which the user account is activated.

Thus, a user may change of mobile phone easily while keeping his SIM card to use a same set of subscription parameters. This is also possible with two different set of subscription parameters corresponding to two different line numbers eventually associated with two different networks, by using a holding module such as that represented on FIG. 1.

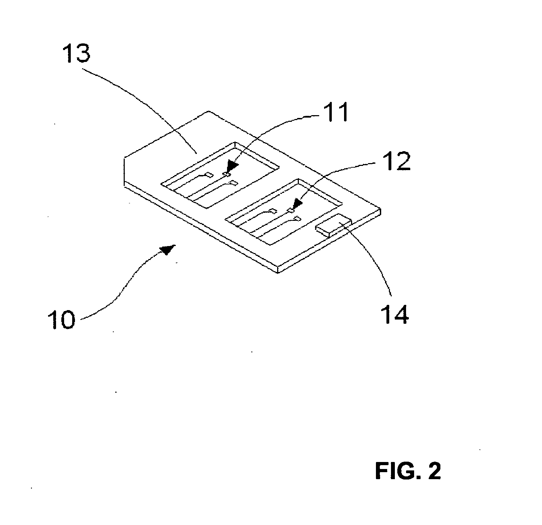

FIG. 2 illustrates a perspective detailed view of a holding module 10 for SIM card according to a preferred embodiment of the present invention, i.e. having a dual SIM card holding capacity similar to the module previously described. However, it is noticeable that the object of the present invention may also be implemented through a holding module adapted for holding one single SIM card at a time without departing from its general scope.

The holding module 10 comprise a first set 11 of electrical connectors intended to connect to electrical contact pads of a first SIM card and a second set 12 of electrical connectors intended to possibly connect to electrical contact pads of a second SIM card.

The holding module further comprises terminal electrical connectors (not visible) intended to be connected to contact pads provided in the SIM card slot of a mobile communication device. The latter may be a mobile telephony terminal, in particular complying with the GSM (Global System for Mobile communications) standard, and/or with GPRS (General Packet Radio Service) or UMTS (Universal Mobile Telecommunications System) standards, generally referred to as 3G (Third-Generation Cell-Phone Technology) standards.

A frame 13 defining the general shape of the holding module corresponding to a conventional SIM card also bears electronic circuits including a holding module microcontroller or control chip 14, connected, on the one hand, to both sets of electrical connectors and, on the other hand, to electrical terminal connectors, as well as memory means.

The implementation of the holding module according to the present invention is not limited to that particular shape, but instead is possible with any other type, provided the latter is adapted to suit any conventional mobile phone available on the market.

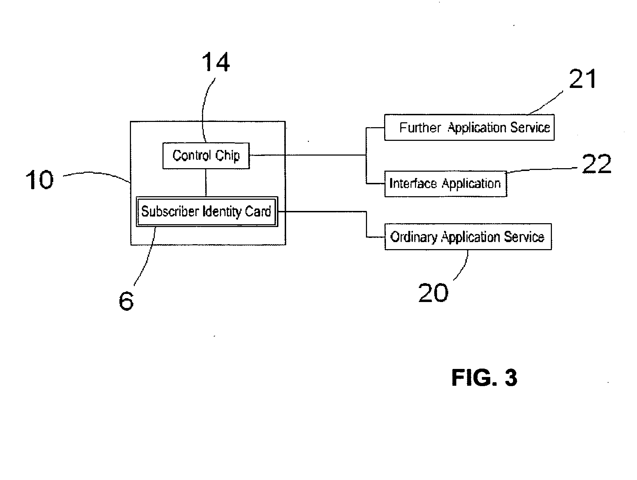

FIG. 3 is a schematic bloc diagram of the above holding module control 10 functions when it is incorporated within a mobile communication device, assuming that at least one SIM card 6 is borne by the holding module.

When the mobile communication device is powered on, a subscriber can use an ordinary application service 20 of the SIM card 6 itself, such as an added-value service of entertainment, an on-line dating, a stock inquiry, and an added-value service of financial consultation, as well as at least one further application 21 provided by the control chip 14 through an interface application 22 of the mobile communication device.

Preferably, when the device interface application 22 provides an interface menu including items respectively related to device service applications, the control chip 14 may provide a new interface entity comprising an additional menu item intended to appear within this interface menu.

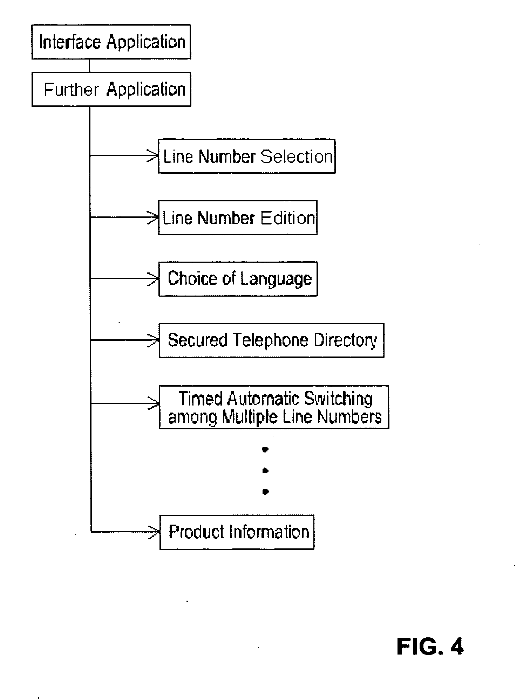

As schematised on the diagram of FIG. 4, the further application or applications provided by the control chip may be taken among the group comprising, for example, a line number selection application, a line number information edition and/or modification application, a language choice application, a memory location selection application for storing data such as SMS, MMS or the like, a secured telephone directory application, a secured organizer application, an automatic timer adjustment application for switching between line numbers, an IP (Internet Protocol) telephone call application preferably including an IP gateway selection application and possibly enabling a simultaneous storing of several IP gateway numbers, a SIM card identifying information edition and/or modification application, a memory means secure access number edition and/or modification application such as PIN or PUK numbers, a calling telephone number blocking and/or filtering application, a ciphered messages sending and/or receiving application such as ciphered SMS, MMS or the like.

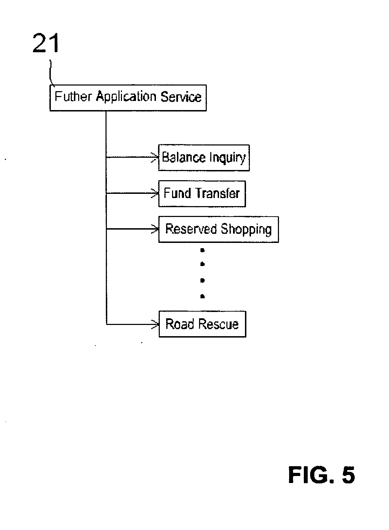

As schematised on the diagram of FIG. 5, the further application or applications may also include, in a non limiting way, a balance inquiry service application, a fund transfer service application, a shopping service application, a road rescue service application or other similar service applications.

The memory means may also store product information related to the holding module and may be further adapted to store advertising information before the holding module is delivered to a user.

According to a preferred embodiment of the present invention, the electronic circuits may be adapted to allow an update or a modification of the at least one further application through a wireless or a wired transmission, while the holding module is connected with a mobile communication device.

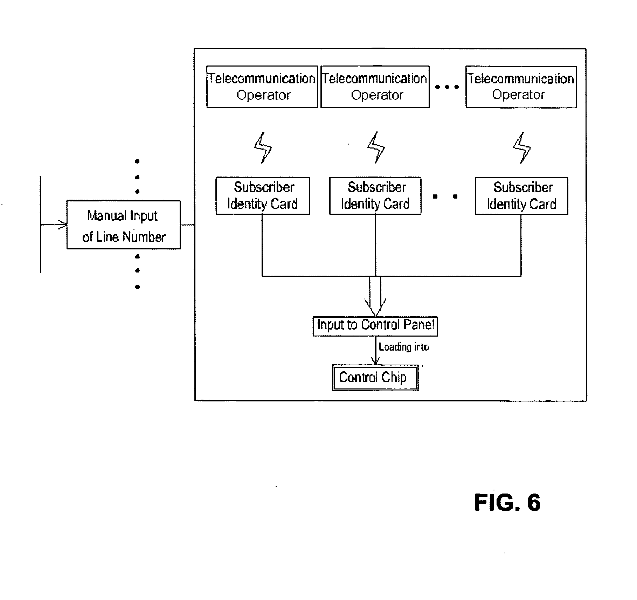

FIG. 6 represents a further embodiment of the present invention, where the holding module for SIM card provides means for allowing use of more line numbers than the number of SIM cards indeed connected. Indeed, among other information, the set of subscription parameters includes an International Mobile Subscriber Identity (IMSI) associated with a specific line number. Means are known in the state of the art to allow the use of multiple IMSI, generally referred to as MIMSI, with a single SIM card plugged in a mobile communication device. According to the present embodiment of the invention, it is provided that for the manual input of line number information, the subscriber can directly load an authentication serial number of each of several different subscriber identify cards corresponding to each telecommunication line number into the control chip of holding module, through an input to a control panel of the mobile communication device (not represented), respectively, such that the mobile communication device can be provided with a function of using multiple line numbers with one card.

It appears from what precedes that, not only a user of the holding module for SIM card according to the present invention can simply carry his set of subscription parameters and the service applications embedded in his SIM card from one mobile communication device to another, but also can he carry his whole memory and software environments including more memory capacity and further applications enhancing the functions of his mobile communication device.

It is of course to be understood that the embodiments described herein are merely illustrative of the principles of the invention and that a wide variety of modifications thereto may be effected by persons skilled in the art without departing from the scope of the invention as set forth in the following claims.

In particular, the type and shape of the holding module regarding its dual SIM card holding capacity should be regarded as non limiting. It could also be of the type bearing two SIM cards on two main parts intended to be superimposed by folding a flexible linking junction provided between them, so that the required space in the mobile phone slot is substantially the same allowing phone apparatus interchangeability.

## Claims

1. Holding module (10) for SIM card (6, 7), intended to be connected electrically with a SIM card slot (5) of a mobile communication device (2) including electrical contact pads (8) intended to be connected with a SIM card, said holding module (10) comprising at least a first set (11) of electrical connectors including holding module contact pads as well as terminal electrical connectors intended to connect said SIM card to said mobile communication device electrical contact pads, said holding module (10) further comprising electronic circuits (14) including a microcontroller and memory means electrically connected to said terminal electrical connectors,
**characterized in that** said holding module with held SIM card is adapted to have the shape and the size of a standard SIM card, and
**in that** said microcontroller of said holding module (10) is programmed to communicate with a device interface application of said communication device, when the holding module is fitted into said mobile communication device, and
**in that** said electronic circuits are adapted for providing said mobile communication device with at least one further application (21) accessible through said device interface application (22).

2. Holding module (10) for SIM card according to claim 1, **characterized in that** said electronic circuits (14) are implemented for providing a new interface entity to said device interface application (22) through which said further application or applications (21) is or are accessible.

3. Holding module (10) for SIM card according to claim 2, when said device interface application (22) provides an interface menu including items respectively related to device service applications, **characterized in that** said new interface entity comprises an additional menu item intended to appear within said interface menu.

4. Holding module (10) for SIM card according to any of the preceding claims, further comprising at least a second set (12) of electrical connectors including holding module contact pads,
**characterized in that** its shape is adapted to allow holding of at least two SIM cards (6, 7), while maintaining its ability to have the shape and the size of a standard SIM card and to be connected electrically with said SIM card slot (5) of a mobile communication device.

5. Holding module (10) for SIM card according to any of the preceding claims, **characterized in that** at least one of said further application or applications (21) is taken among the group including: a line number selection application, a line number information edition and/or modification application, a language choice application, a memory location selection application for storing data such as SMS, MMS or the like, a secured telephone directory application, a secured organizer application, an automatic timer adjustment application for switching between line numbers, an IP telephone call application preferably including an IP gateway selection application and possibly enabling a simultaneous storing of several IP gateway numbers, a SIM card identifying information edition and/or modification application, a memory means secure access number edition and/or modification application such as PIN or PUK numbers, a calling telephone number blocking and/or filtering application, a ciphered messages sending and/or receiving application such as ciphered SMS, MMS or the like, a balance inquiry service application, a fund transfer service application, a shopping service application, a road rescue service application.

6. Holding module (10) for SIM card according to claim 5, **characterized in that** said memory means are further adapted to store advertising information before said holding module is delivered to a user.

7. Holding module (10) for SIM card according to any of the preceding claims, **characterized in that** said electronic circuits (14) are adapted to allow an update or a modification of said at least one further application through a wireless or a wired transmission.

8. Use of a mobile communication device (2) in combination with a SIM card (6, 7) where said SIM card is held by a holding module (10) according to any of the preceding claims connected to said mobile communication device, wherein said holding module being intended to communicate with a device interface application (22) of said communication device , said holding module being intended for providing said mobile communication device with at least one further application (21) intended to be accessible through said device interface application.

9. Use of a mobile communication device according to claim 8, when said device interface application (22) provides an interface menu including items respectively related to device service applications, **characterized in that** said holding module (10) is adapted for providing said device interface application with an additional menu item appearing within said interface menu.

10. Use of a mobile communication device according to claim 8 or 9, **characterized in that** said mobile communication device preferably includes GSM or 3G communication electronic means.

## Patentansprüche

1. Haltemodul (10) für SIM-Karten (6, 7), das dafür bestimmt ist, an einen SIM-Kartensteckplatz (5) einer mobilen Kommunikationsvorrichtung (2) elektrisch angeschlossen zu sein, umfassend elektrische Kontaktflächen (8), die dafür bestimmt sind, an eine SIM-Karte angeschlossen zu werden, wobei das Haltemodul (10) mindestens einen ersten Satz (11) von elektrischen Verbindungsteilen, die Haltemodul-Kontaktflächen sowie elektrische Endverbinder umfassen, die dafür bestimmt sind, um die SIM-Karte an die elektrischen Kontaktflächen der mobilen Kommunikationsvorrichtung anzuschließen, umfasst, wobei das Haltemodul (10) ferner elektronische Schaltungen (14) umfasst, die einen Mikrocontroller und Speichermittel umfassen, die elektrisch an die elektrischen Endverbinder angeschlossen sind,
**dadurch gekennzeichnet, dass** das Haltemodul mit der gehaltenen SIM-Karte dazu geeignet ist, die Form und die Größe einer Standard-SIM-Karte aufzuweisen, und
dass der Mikrocontroller des Haltemoduls (10) programmiert ist, um mit einer Vorrichtungsschnittstellen-Anwendung der Kommunikationsvorrichtung zu kommunizieren, wenn das Haltemodul in die mobile Kommunikationsvorrichtung eingefügt wird, und
dass die elektronischen Schaltungen geeignet sind, um der mobilen Kommunikationsvorrichtung mindestens eine andere Anwendung (21) bereitzustellen, die über die Vorrichtungsschnittstellen-Anwendung (22) zugänglich ist.

2. Haltemodul (10) für SIM-Karten nach Anspruch 1, **dadurch gekennzeichnet, dass** die elektronischen Schaltungen (14) umgesetzt sind, um der Vorrichtungsschnittstellen-Anwendung (22) eine neue Schnittstellenentität bereitzustellen, über welche die andere(n) Anwendung(en) (21) zugänglich ist bzw. sind.

3. Haltemodul (10) für SIM-Karten nach Anspruch 2, wenn die Vorrichtungsschnittstellen-Anwendung (22) ein Schnittstellenmenü bereitstellt, das Punkte umfasst, die sich jeweils auf Dienstanwendungen der Vorrichtung beziehen, **dadurch gekennzeichnet, dass** die neue Schnittstellenentität einen zusätzlichen Menüpunkt umfasst, der dafür bestimmt ist, innerhalb des Schnittstellenmenüs zu erscheinen.

4. Haltemodul (10) für SIM-Karten nach einem der vorhergehenden Ansprüche, ferner umfassend mindestens einen zweiten Satz (12) von elektrischen Verbindungsteilen, die Haltemodul-Kontaktflächen umfassen,
**dadurch gekennzeichnet, dass** seine Form dazu geeignet ist, um mindestens zwei SIM-Karten (6, 7) zu halten und dabei seine Fähigkeit zu behalten, die Form und die Größe einer Standard-SIM-Karte aufzuweisen und elektrisch an den SIM-Kartensteckplatz (5) einer mobilen Kommunikationsvorrichtung angeschlossen zu werden.

5. Haltemodul (10) für SIM-Karten nach einem der vorhergehenden Ansprüche, **dadurch gekennzeichnet, dass** mindestens eine der anderen Anwendung(en) (21) aus der Gruppe genommen wird, die Folgendes umfasst: eine Anwendung zur Auswahl einer Leitungsnummer, eine Anwendung zur Bearbeitung und/oder Modifikation von Informationen einer Leitungsnummer, eine Anwendung zur Wahl der Sprache, eine Anwendung zur Auswahl eines Speicherplatzes zum Speichern von Daten, wie etwa SMS, MMS oder dergleichen, eine Anwendung eines sicheren Telefonbuchs, eine Anwendung eines sicheren Organizers, eine Anwendung zur Einstellung eines automatischen Zeitmessers zum Umschalten zwischen Leitungsnummern, eine Anwendung zum IP-Telefonieren, die bevorzugt eine Anwendung zur Auswahl eines IP-Gateways umfasst und eventuell eine gleichzeitige Speicherung mehrerer IP-Gateway-Nummern ermöglicht, eine Anwendung zur Bearbeitung und/oder Modifikation von Informationen, die eine SIM-Karte identifizieren, eine Anwendung zur Bearbeitung und/oder Modifikation einer Nummer zum sicheren Zugriff auf die Speichermittel, wie etwa PIN- oder PUK-Nummern, eine Anwendung zum Blockieren und/oder Filtern einer anrufenden Telefonnummer, eine Anwendung zum Senden und/oder Empfangen von verschlüsselten Nachrichten, wie etwa von verschlüsselten SMS, MMS oder dergleichen, eine Anwendung eines Dienstes zum Abfragen des Kontostandes, eine Anwendung eines Dienstes für Überweisungen, eine Anwendung eines Dienstes zum Einkaufen und eine Anwendung eines Dienstes für Straßenverkehrsrettung.

6. Haltemodul (10) für SIM-Karten nach Anspruch 5, **dadurch gekennzeichnet, dass** die Speichermittel ferner dazu geeignet sind, um Werbeinformationen zu speichern, bevor das Haltemodul an einen Benutzer geliefert wird.

7. Haltemodul (10) für SIM-Karten nach einem der vorhergehenden Ansprüche, **dadurch gekennzeichnet, dass** die elektronischen Schaltungen (14) dazu geeignet sind, um eine Aktualisierung oder eine Modifikation der mindestens einen anderen Anwendung durch eine drahtlose oder drahtgebundene Übertragung zu ermöglichen.

8. Verwendung einer mobilen Kommunikationsvorrichtung (2) kombiniert mit einer SIM-Karte (6, 7), wobei die SIM-Karte von einem Haltemodul (10) nach einem der vorhergehenden Ansprüche gehalten wird, das an die mobile Kommunikationsvorrichtung angeschlossen wird, wobei das Haltemodul dafür bestimmt ist, um mit einer Vorrichtungsschnittstellen-Anwendung (22) der Kommunikationsvorrichtung zu kommunizieren, wobei das Haltemodul dafür bestimmt ist, um der mobilen Kommunikationsvorrichtung mindestens eine weitere Anwendung (21) bereitzustellen, die dafür bestimmt ist, um über die Vorrichtungsschnittstellen-Anwendung zugänglich zu sein.

9. Verwendung einer mobilen Kommunikationsvorrichtung nach Anspruch 8, wenn die Vorrichtungsschnittstellen-Anwendung (22) ein Schnittstellenmenü bereitstellt, das Punkte umfasst, die sich jeweils auf Dienstanwendungen der Vorrichtung beziehen, **dadurch gekennzeichnet, dass** das Haltemodul (10) dazu geeignet ist, um der Vorrichtungsschnittstellen-Anwendung einen zusätzlichen Menüpunkt bereitzustellen, der in dem Schnittstellenmenü erscheint.

10. Verwendung einer mobilen Kommunikationsvorrichtung nach Anspruch 8 oder 9, **dadurch gekennzeichnet, dass** die mobile Kommunikationsvorrichtung bevorzugt elektronische GSM- oder 3G-Kommunikationsmittel umfasst.

## Revendications

1. Module support (10) pour carte SIM (6, 7), destiné à être connecté électriquement à un emplacement de carte SIM (5) d'un dispositif de communication mobile (2) comprenant des plages de contact électrique (8) prévues pour être connectées à une carte SIM, ledit module support (10) comprenant au moins un premier jeu (11) de connecteurs électriques comprenant des plages de contact du module support ainsi que des connecteurs électriques terminaux destinés à connecter ladite carte SIM auxdites plages de contact électrique du dispositif de communication mobile, ledit module support (10) comprenant en outre des circuits électroniques (14) comprenant un microcontrôleur et des moyens de mémoire connectés électriquement auxdits connecteurs électriques terminaux,
**caractérisé en ce que** ledit module support, lorsqu'il supporte une carte SIM, est adapté pour avoir la forme et la dimension d'une carte SIM standard, et
**en ce que** ledit microcontrôleur dudit module support (10) est programmé pour communiquer avec une application d'interface dudit dispositif de communication lorsque le module support est mis en place dans ledit dispositif de communication mobile, et
**en ce que** lesdits circuits électroniques sont adaptés pour fournir audit dispositif de communication mobile au moins une application supplémentaire (21) accessible à travers ladite application d'interface du dispositif (22).

2. Module support (10) pour carte SIM selon la revendication 1, **caractérisé en ce que** lesdits circuits électroniques (14) sont mis en oeuvre pour fournir une nouvelle entité d'interface à ladite application d'interface du dispositif (22) par laquelle ladite application supplémentaire ou lesdites applications supplémentaires (21) est accessible ou sont accessibles.

3. Module support (10) pour carte SIM selon la revendication 2, quand ladite application d'interface du dispositif (22) fournit un menu d'interface comprenant des éléments respectivement liés à des applications de service du dispositif, **caractérisé en ce que** ladite nouvelle entité d'interface comprend un élément de menu supplémentaire destiné à apparaître à l'intérieur dudit menu d'interface.

4. Module support (10) pour carte SIM selon l'une quelconque des revendications précédentes, comprenant en outre au moins un deuxième jeu (12) de connecteurs électriques comprenant des plages d contact du module support,
**caractérisé en ce que** sa forme est adaptée pour permettre de maintenir au moins deux cartes SIM (6, 7), tout en conservant sa capacité d'avoir la forme et la dimension d'une carte SIM standard et d'être connecté électriquement audit emplacement de carte SIM (5) d'un dispositif de communication mobile.

5. Module support (10) pour carte SIM selon l'une quelconque des revendications précédentes, **caractérisé en ce qu'**au moins l'une de ladite ou desdites applications supplémentaires (21) est choisie dans le groupe comprenant : une application de sélection de numéro de ligne, une application d'édition et/ou de modification des informations de numéro de ligne, une application de choix de langue, une application de sélection d'emplacement de mémoire pour stocker des données comme des SMS, des MMS ou similaires, une application de répertoire téléphonique sécurisé, une application d'organiseur sécurisé, une application d'ajustement de temporisateur automatique pour commuter entre des numéros de ligne, une application d'appel téléphonique IP comprenant de préférence une application de sélection de passerelle IP et permettant éventuellement un stockage simultané de plusieurs numéros de passerelle IP, une application d'édition et/ou de modification des informations identifiant une carte SIM, une application d'édition et/ou de modification d'un numéro d'accès sécurisé aux moyens de mémoire, comme des numéros PIN ou PUK, une application de blocage et/ou de filtrage de numéro téléphonique appelant, une application d'envoi et/ou de réception de messages chiffrés, comme des SMS, des MMS ou similaires chiffrés, une application de service d'interrogation de solde, une application de service de virement, une application de service de courses, et une application de service de secours routier.

6. Module support (10) pour carte SIM selon la revendication 5, **caractérisé en ce que** lesdits moyens de mémoire sont en outre adaptés pour stocker des informations de publicité avant que ledit module support soit fourni à un utilisateur.

7. Module support (10) pour carte SIM selon l'une quelconque des revendications précédentes, **caractérisé en ce que** lesdits circuits électroniques (14) sont adaptés pour permettre une mise à jour ou une modification de ladite ou desdites applications supplémentaires par une transmission sans fil ou filaire.

8. Utilisation d'un dispositif de communication mobile (2) en combinaison avec une carte SIM (6, 7), dans laquelle ladite carte SIM est maintenue par un module support (10) selon l'une quelconque des revendications précédentes, connecté audit dispositif de communication mobile, dans laquelle ledit module support est destiné à communiquer avec une application d'interface (22) dudit dispositif de communication, ledit module support étant destiné à fournir audit dispositif de communication mobile au moins une autre application (21) destinée à être accessible à travers ladite application d'interface du dispositif.

9. Utilisation d'un dispositif de communication mobile selon la revendication 8, lorsque ladite application d'interface du dispositif (22) fournit un menu d'interface comprenant des éléments respectivement liés à des applications de service du dispositif, **caractérisée en ce que** ledit module support (10) est adapté pour fournir à ladite application d'interface du dispositif un élément de menu supplémentaire apparaissant dans ledit menu d'interface.

10. Utilisation d'un dispositif de communication mobile selon la revendication 8 ou 9, **caractérisée en ce que** ledit dispositif de communication mobile comprend de préférence des moyens électronique de communication GSM ou 3G.
